# FASCICULE DE BREVET EUROPEEN

(11) **EP 2 255 124 B1**
(45) Date de publication et mention de la délivrance du brevet: **24.08.2011**
(21) Numéro de dépôt: 09719769.3
(22) Date de dépôt: 28.01.2009
(51) Int. Cl.: F17C 7/00, F17C 7/02, F17C 13/02

(54) **SYSTEME DE RECHAUFFAGE ELECTRIQUE DE GAZ**
ELEKTRISCHES GASERHITZUNGSSYSTEM
GAS ELECTRIC HEATING SYSTEM

(30) Priorité: 06.03.2008 FR 0851466
(43) Date de publication de la demande: 01.12.2010
(73) Titulaire: L'Air Liquide Société Anonyme pour l'Etude et l'Exploitation des Procédés Georges Claude, 75007 Paris (FR)
(72) Inventeur: HOCQ, Gilbert, F-61110 Sainte Scolasse (FR); TAUPIN, Jean Yves, F-61230 Gace (FR)
(74) Mandataire: Grout de Beaufort, François-Xavier
(86) Numéro de dépôt international: PCT/FR2009/050124
(87) Numéro de publication internationale: WO 2009/112726

(56) Documents cités:
- DE-A1-102005 002 976
- DE-A1-102005 049 252
- DE-U1- 8 810 275

## Description

La présente invention concerne un système de réchauffage électrique de gaz sous forme liquide ou gazeuse ainsi qu'un procédé de réchauffage de ces gaz.

Il est connu que la détente des gaz s'accompagne généralement d'un abaissement de leur température. Bien que cette propriété soit variable d'un gaz à l'autre, le CO₂ et le N₂O se détendent avec des abaissements de température particulièrement importants qui peuvent engendrer un refroidissement important des détendeurs et canalisations auxquels ces sources de gaz sont raccordées, accompagné d'un givrage externe et parfois d'un givrage interne ou de formation de paillettes, en particulier en présence d'humidité, pouvant soit bloquer ou ralentir le débit de gaz, soit empêcher le fonctionnement du clapet de détente du détendeur et conduire ainsi à une élévation incontrôlée de la pression de gaz en sortie dudit détendeur.

Les solutions connues pour remédier à ces problèmes sont de dissiper les « frigories » dans l'air ambiant en dotant le détendeur d'ailettes favorisant l'échange thermique par convection ou d'installer un « réchauffeur » électrique entre la bouteille et le détendeur pour réchauffer le gaz et limiter le givrage.

Un réchauffeur a pour fonction de maintenir constante la phase gazeuse d'un gaz liquéfié dans un récipient afin d'engendrer un bon fonctionnement des dispositifs en aval du réchauffeur. Par exemple la formation de glace dans un détendeur situé en aval d'un récipient de gaz peut être évitée grâce à l'emploi d'un réchauffeur. Un réchauffeur est utilisable pour tout gaz nécessitant par exemple un réchauffage à basse température comme notamment le CO₂, O₂, N₂, Argon, N₂O, ou un mélange de ces gaz. Un système de réchauffage est divulgué dans le document DE 10 2005 049252.

Les réchauffeurs électriques sont installés sur les bouteilles en amont du détendeur, sur le circuit haute pression. Dès lors, leur montage demande une extrême rigueur car toute fuite sur le circuit haute pression peut devenir critique.

Pour remplir leur rôle et tenter de remédier aux inconvénients et problèmes susmentionnés, les réchauffeurs doivent être dotés de résistances électriques de puissance élevée, couramment de 100W à 1000W, lesquelles impliquent la mise en oeuvre de moyens de régulation permettant d'interrompre l'alimentation électrique, lorsqu'il n'y a pas de débit, et ce, pour limiter l'échauffement du réchauffeur et du robinet de bouteille, les risques de dilatations...

Les réchauffeurs actuels, se présentent sous la forme d'une résistance chauffante tubulaire reliée, par une extrémité, à un moyen de régulation tel que mentionné ci-dessus et à un fusible thermique. Un conduit de circulation de gaz sous forme de serpentin est enroulé autour de ladite résistance. Ces réchauffeurs présentent l'inconvénient d'un risque élevé de points chauds. En outre la régulation n'est pas optimale compte tenue des positions du moyen de régulation et du fusible thermique. Le circuit de gaz est en contact direct avec la résistance, ce qui peut conduire le dispositif à des températures supérieures aux températures de décomposition et d'inflammation des gaz véhiculés en cas de surchauffe : il y a donc également des risques de fuites et d'explosions du dispositif. Par ailleurs, un tel agencement n'est absolument pas optimal en termes, par exemple, de stabilité et d'homogénéité de chauffage, de diffusion de la chaleur ou de débit de circulation.

Un but de la présente invention est de pallier tout ou partie des inconvénients de l'art antérieur relevés ci-dessus.

A cette fin, la présente invention a pour principal objet un système de réchauffage d'au moins un gaz ou mélange de gaz circulant dans un conduit dont une extrémité est destinée à être reliée à au moins une source de gaz liquide ou sous pression, comprenant au moins une source de chauffage électrique adjacente à une partie du conduit, caractérisé en ce qu'au moins un écran thermique est interposé entre la source de chauffage et au moins une partie du conduit de circulation du gaz à réchauffer.

Par ailleurs, des modes de réalisation de l'invention peuvent comporter l'une ou plusieurs des caractéristiques suivantes :
Le système défini précédemment est caractérisé en ce que ledit écran thermique comprend au moins une paroi métallique ayant une forme courbe ou plane, dont la surface supérieure est adjacente à au moins une partie de la surface inférieure du conduit de circulation et dont la surface inférieure est adjacente à au moins une partie de la source de chauffage.

Le système défini précédemment est caractérisé en ce que ledit écran thermique est une plaque métallique.

Le système défini précédemment est caractérisé en ce que le conduit de circulation présente une forme de serpentin bobinée en spirale ou en hélice dont la surface inférieure épouse la forme de la surface supérieure de l'écran thermique.

Le système défini précédemment est caractérisé en ce que le conduit de circulation en forme de serpentin est bobiné en au moins une spirale à deux dimensions disposée dans un plan sensiblement parallèle au plan de la (ou des) plaque(s) métallique(s) de l'écran thermique, de préférence le serpentin est bobiné en deux spirales à deux dimensions superposées et disposées dans deux plans sensiblement parallèles au plan de la (ou des) plaque(s) métallique(s) de l'écran thermique.

Le système défini précédemment est caractérisé en ce que l'écran thermique s'étend sur 40% à 95% de la surface du conduit de circulation, de préférence sur 60% à 95% et de préférence encore de 75% à 95%.

Le système défini précédemment est caractérisé en ce que la seconde extrémité du conduit de circulation est reliée à un dispositif de détente de gaz.

Le système défini précédemment est caractérisé en ce que la source de chauffage comprend au moins une résistance électrique, un thermostat de régulation et un fusible thermique.

Le système défini précédemment est caractérisé en ce que ladite résistance thermique présente une surface extérieure épousant la forme de la surface inférieure de l'écran thermique.

Le système défini précédemment est caractérisé en ce que l'écran thermique est en contact permanent avec au moins une partie du conduit de circulation et une partie de la résistance.

Le système défini précédemment est caractérisé en ce que l'ensemble des composants dudit système est compris dans un carter de protection.

Le système défini précédemment est caractérisé en ce que le conduit de circulation présente une forme de serpentin bobiné en au moins deux spirales à deux dimensions ; en ce que l'écran thermique comprend plusieurs plaques métalliques ; en ce que la source de chauffage comprend une résistance électrique en forme de plaque métallique présentant des dimensions sensiblement égales aux dimensions des plaques de l'écran thermique et en ce que :
- la surface supérieure d'une première plaque métallique est en contact avec une surface extérieure de la première spirale du serpentin,
- la surface supérieure de ladite première spirale du serpentin est en contact avec la surface inférieure d'une deuxième plaque métallique faisant écran thermique,
- la surface supérieure de ladite deuxième plaque métallique est en contact avec la surface inférieure de la résistance électrique,
- la surface supérieure de ladite résistance électrique est en contact avec la surface inférieure d'une troisième plaque métallique faisant écran thermique,
- la surface supérieure de ladite troisième plaque métallique est en contact avec la surface inférieure de la deuxième spirale du serpentin,
- la surface supérieure de ladite deuxième spirale du serpentin est en contact avec la surface inférieure d'une quatrième plaque métallique,
l'ensemble des plaques étant fixées les unes par rapport aux autres par au moins un dispositif de vis-écrou, ou un dispositif équivalent.

Le système défini précédemment est caractérisé en ce que qu'il est intégré à une source de gaz et comporte un moyen de raccord vers un dispositif de détente.

La présente invention a aussi pour objet un procédé de réchauffage d'au moins un gaz mettant en oeuvre un système tel que défini précédemment, comprenant les étapes :
- circulation d'un gaz issu d'une source de gaz liquéfié, par exemple CO₂, O₂, N₂, Argon, N₂O, ou un mélange de ces gaz, à un débit compris entre 1m³/h et 100m³/h ;
- régulation de la température du système comprise entre 20°C et 100°C avec une température de coupure du système comprise entre 40°C et 150°C.

La longueur du conduit de circulation est comprise entre 50 cm et quelques mètres, par exemple entre 50 cm et 10 m, de préférence entre 1 m et 3m. Le diamètre dudit conduit de circulation est compris entre 4 mm et 150 mm, de préférence entre 10 mm et 75 mm. Cette longueur et ce diamètre étant fonction de la surface d'échange thermique entre le conduit et la source de chaleur. Le matériau choisi pour l'écran thermique et/ou le conduit de circulation est par exemple de l'aluminium. Le matériau peut aussi être de l'acier inoxydable, du cuivre. Selon un mode particulier de l'invention, l'écran thermique et le conduit de circulation sont constitués d'un même matériau. L'écran thermique peut également être soudé sur la surface extérieure du conduit de circulation afin d'améliorer la surface d'échange thermique, le contact entre l'écran thermique et le conduit de circulation d'une part et l'écran thermique et la résistance chauffante d'autre part étant permanent.

D'autres particularités et avantages apparaîtront à la lecture de la description ci-après, faite en référence aux figures dans lesquelles :
- la figure 1 représente un schéma détaillé des composants non assemblés d'un mode de réalisation du système selon l'invention ;
- la figure 2 représente un schéma des composants assemblés d'un mode de réalisation du système selon l'invention ;
- la figure 3 représente un schéma du conduit de circulation en serpentin sous forme de double spirale utilisé dans un mode de réalisation d'un système selon l'invention.

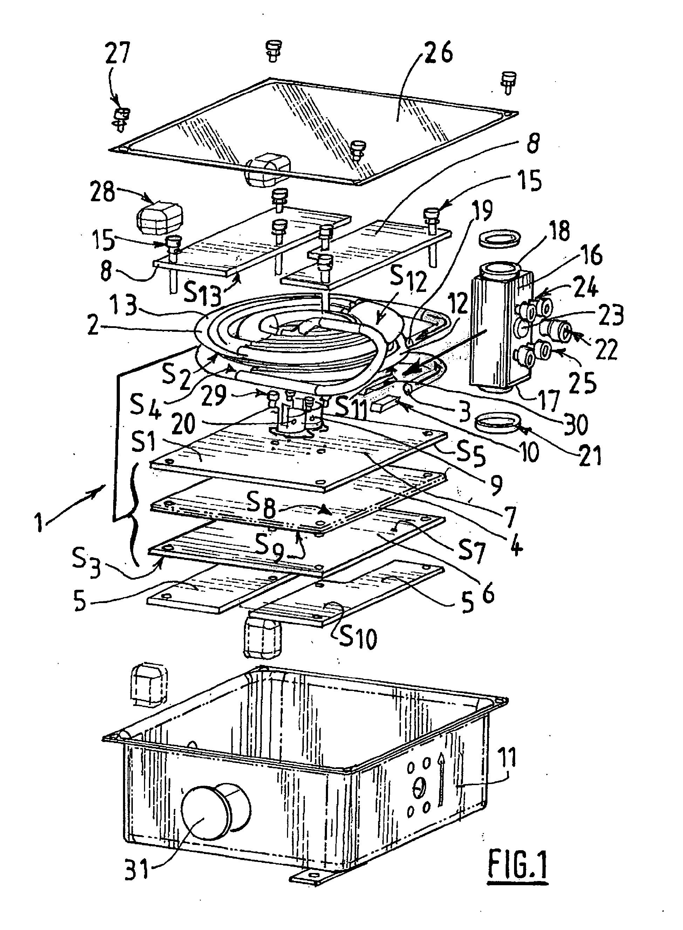

La figure 1 illustre l'agencement des composants d'un mode de réalisation du système de réchauffage selon l'invention. Le système de réchauffage 1 d'au moins un gaz ou mélange de gaz circulant dans un conduit 2 dont une extrémité 3 est destinée à être reliée à au moins une source de gaz liquide ou sous pression, comporte une source de chauffage électrique 4 adjacente à une partie du conduit 2. Le système 1 comporte également un écran thermique constitué de plaques métalliques 6 ; 7 interposées entre la source de chauffage 4 et au moins une partie du conduit 2 de circulation du gaz à réchauffer.

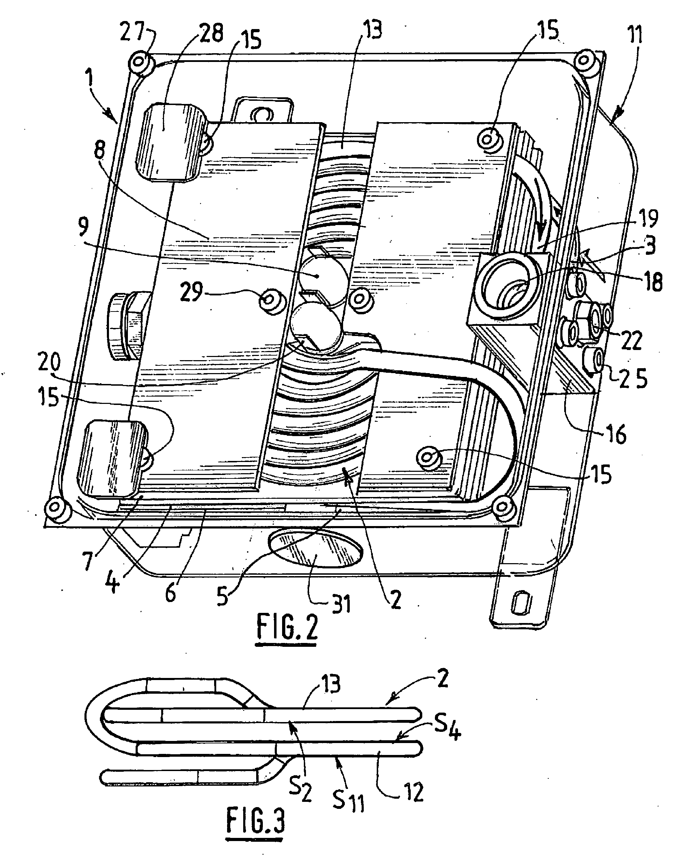

Le conduit de circulation 2 de gaz à réchauffer présente une forme de serpentin bobiné en au moins deux spirales à deux dimensions, c'est à dire une spirale à deux étages, comme illustré sur la figure 3. L'écran thermique comprend plusieurs plaques métalliques 5 ; 6 ; 7 et 8. La source de chauffage 4 comprend une résistance électrique en forme de plaque métallique présentant des dimensions sensiblement égales aux dimensions des plaques de l'écran thermique. L'agencement des plaques et de la source de chaleur est le suivant :
- la surface supérieure S₁₀ d'une première plaque métallique 5 est en contact avec une surface extérieure S₁₁ de la première spirale 12 du serpentin,
- la surface supérieure S₄ de ladite première spirale 12 du serpentin est en contact avec la surface inférieure S₃ d'une deuxième plaque métallique 6 faisant écran thermique,
- la surface supérieure S₇ de ladite deuxième plaque métallique 6 est en contact avec la surface inférieure S₉ de la résistance électrique 4,
- la surface supérieure S₈ de ladite résistance électrique est en contact avec la surface inférieure S₅ d'une troisième plaque métallique 7 faisant écran thermique,
- la surface supérieure S₁ de ladite troisième plaque métallique 7 est en contact avec la surface inférieure S₂ de la deuxième spirale 13 du serpentin,
- la surface supérieure S₁₂ de ladite deuxième spirale 13 du serpentin est en contact avec la surface inférieure S₁₃ d'une quatrième plaque métallique 8.

Les différentes plaques sont fixées les unes par rapport aux autres par au moins un dispositif 15 de vis-écrou, ou un dispositif équivalent. Selon un mode de réalisation de l'invention, les dimensions des différentes plaques métalliques et de la résistance chauffante sont sensiblement les mêmes. Ces dimensions varient en fonction de la puissance de la résistance électrique. La longueur des côtés des plaques est comprise entre 30mm et 800mm, de préférence entre 50mm et 500mm.

Un tel agencement présente l'avantage qu'une surface d'échange de chaleur très importante est créée comparativement aux réchauffeurs actuels. En effet, un conduit de circulation en serpentin bobiné en spirale à deux dimensions située dans un plan parallèle au plan de l'écran thermique constitué de plaques métalliques parallèles améliore considérablement le rendement de diffusion de la chaleur ainsi que le débit de circulation de gaz. Ainsi la surface de contact entre l'écran thermique et le conduit de circulation est environ trois fois supérieure à la surface de contact présente entre la résistance chauffante et le conduit de circulation de gaz des réchauffeurs de l'état de la technique. Pour augmenter encore la surface d'échange thermique, le conduit de circulation 2 peut aussi être « noyé » dans un bloc de métal. Grâce à l'augmentation de la surface d'échange de chaleur, la taille du réchauffeur peut ainsi être diminuée, diminuant alors l'encombrement du système à fixer au dessus de la source de gaz.

L'extrémité 3 du conduit de circulation 2 est reliée à une source de gaz liquéfié, par exemple une bouteille de gaz ou une centrale. Comme illustré sur la figure 2, un bloc de raccord 16 est relié par une extrémité 17, à ladite source de gaz et par une extrémité 18 à un matériel situé en aval du réchauffeur, par exemple un système de détente. Ce bloc 16 est par exemple un bloc en laiton. L'extrémité 3 du conduit 2 est située en bas du bloc de raccord 16 ; le gaz issu de la source entre alors dans le conduit 2 par l'intermédiaire de cette extrémité 3. L'extrémité 19 du conduit de circulation 2 est située en haut du bloc 16 de raccord, de sorte que le gaz réchauffé dans le conduit 2 sort de ce conduit 2 par cette extrémité pour se diriger dans le sens des flèches présentes sur les figures 1 et 2. Des joints d'étanchéité 21 peuvent être installés entre l'extrémité 17 du bloc 16 et la sortie de la source de gaz et l'extrémité 19 du bloc 16 et l'entrée du dispositif en aval du réchauffeur, par exemple un dispositif de détente.

La source de chauffage est commandée par un thermostat de régulation 9 alimenté par une tension, par exemple 230 V. Un fusible thermique 10 est également présent. Une température dite de régulation est imposée par l'utilisateur au thermostat 9 selon la nature du gaz à réchauffer. En effet les températures pour lesquelles les gaz peuvent devenir dangereux varient selon la nature du gaz. Le fusible thermique a pour rôle de couper le chauffage lorsque la température du système dépasse une température seuil. Par exemple lorsque le gaz à réchauffer est du protoxyde d'azote N₂O, la température de régulation est fixée à 70°C environ et celle du seuil qui provoque le dysfonctionnement du fusible est fixée à 90°C environ de sorte que la température du système ne dépasse jamais la température pour laquelle il pourrait y avoir danger à cause des propriétés du N₂O, c'est-à-dire environ 150°C. Si l'utilisateur utilise de l'oxygène, la température de régulation est de 30°C et la température seuil vaut environ 50°C. Avantageusement, l'utilisateur peut imposer les températures qu'il désire, le principe restant le même que celui qui vient d'être décrit. Le système selon l'invention présente donc l'avantage d'être adaptable aux contraintes de sécurité de tous les gaz suivant la régulation imposée. Facultativement le système selon l'invention peut comporter un deuxième thermostat 20 de régulation, pour renforcer la sécurité. A ce thermostat 20, il est par exemple imposé une température sensiblement égale à la température seuil imposée au fusible 10. La puissance thermique d'un tel système peut varier de quelques watts à, par exemple, 10kW. Les systèmes les plus fréquents ont une puissance située entre 100W et 1000W. Pour un réservoir d'une quantité, par exemple de protoxyde d'azote, comprise entre 5 tonnes à 20 tonnes, une puissance d'environ 4kW est envisagée. Les thermostats 9 ; 20 sont fixés au système 1 au moyen de dispositifs 29 de fixation, par exemple des vis. Le fusible 10 peut être fixé par un clip 30. Un signal lumineux (non représenté) peut également être placé sur l'extérieur du système 1 pour indiquer à l'utilisateur que la température seuil est atteinte et donc que la résistance va cesser de chauffer car le fusible aura brûlé. Un tel signal est par exemple un tube néon.

Sur le bloc de raccord 16, un disque de rupture 22 est présent. Il s'agit d'un système opercule de sécurité 23 avec vis 22. Au moins un moyen de raccord 24 pour un câble électrique est également présent. Le bloc est fixé au système 1 à l'aide d'une vis de fixation 25.

Lorsque tous les composants du système de réchauffage 1 sont assemblés, ils sont disposés dans carter ou coffret 11 recouvrant le système 1. Le coffret est ensuite fermé à l'aide d'un couvercle 26 fixé par des vis 27. Facultativement, des moyens de calage 28 peuvent être présents dans le coffret pour assurer une plus grande stabilité au système 1. Un évent de sécurité 31 peut également être placé sur une paroi du coffret 11.

Les valeurs des paramètres de température et de pression varient en fonction du débit de circulation de gaz et des conditions extérieures de l'environnement dans lequel se trouve le système selon l'invention.

Selon un autre mode de réalisation de l'invention, non représentée sur une figure, le conduit de circulation se présente sous la forme d'un serpentin bobiné en une spirale à plus de deux étages. Une résistance électrique accompagnée d'un écran thermique tel que celui décrit ci-dessus étant situé entre chaque étage. Lorsque les résistances électriques d'un tel système de réchauffage sont en parallèle, le système présente l'avantage suivant : lorsqu'une résistance est défectueuse, le manque de chaleur est compensé, ou du moins n'est pas réduit à néant, grâce à la présence des autres résistances.

Selon un autre mode de réalisation de l'invention, non représentée sur une figure, le système de réchauffage est constitué d'un conduit de circulation sous forme de serpentin bobiné en spirale à deux dimensions d'un seul étage. Deux résistances électriques accompagnées chacune d'un système d'écran thermique tel que décrit ci-dessus sont alors présentes, l'une au dessus de la spirale, l'autre en dessous.

Selon un autre mode de réalisation de l'invention, non représentée sur une figure, le système de réchauffage a une forme cylindrique. Une résistance électrique tubulaire, par exemple de 200W est recouverte d'une paroi métallique sous forme de tube creux dans lequel la résistance est insérée. Ladite paroi métallique tubulaire est elle-même insérée dans un cylindre représenté par le conduit de circulation du gaz à réchauffer. Ledit conduit est par exemple un serpentin bobiné en hélice autour de ladite paroi métallique. Le mécanisme de fonctionnement du système étant basé sur le même principe que le système de réchauffage décrit dans le précédent mode de réalisation, notamment le dispositif de raccord avec la source de gaz et le matériel en aval du réchauffeur. Un tel système présente l'avantage que la surface d'échange thermique est encore améliorée.

En variante, le dispositif de réchauffage de l'invention peut être intégré dans un robinet-détendeur intégré. La présente invention est applicable à toutes les installations ou conditionnements contenant un gaz sous pression, en particulier du CO2 ou des mélanges à base de CO2 conditionnés en bouteilles destinés au domaine du soudage MAG ou au domaine des boissons gazeuses, c'est-à-dire pour pressuriser un liquide avec un gaz, en particulier de la bière avec du dioxyde de carbone. Un tel système de réchauffage peut être utilisé dans l'industrie agroalimentaire, le domaine du soudage (Argon, CO₂), le domaine du médical (N₂O), avec des débits de circulation de gaz différents selon l'application. D'autres applications sont les tests en laboratoire, l'industrie pétrolière, les gaz liquéfiés en général. Certaines industries comme la fabrication de semi-conducteurs, de cellules solaires ou encore de fibres optiques, aujourd'hui confrontées à des besoins croissants en gaz de haute pureté à diverses étapes de fabrication. Certains de ces gaz tels HCl, Cl₂, HBr, N₂O, NH₃, WF₆, BCl₃, 3MS, pour n'en citer que quelques-uns, sont liquéfiés à température ambiante. Pour cette dernière application, le système de réchauffage est situé autour du récipient de gaz liquéfié.

## Revendications

1. Système de réchauffage (1) d'au moins un gaz ou mélange de gaz circulant dans un conduit (2) dont une extrémité (3) est destinée à être reliée à au moins une source de gaz liquide ou sous pression, comprenant au moins une source de chauffage électrique (4) adjacente à une partie du conduit (2), **caractérisé en ce qu'**au moins un écran thermique (6 ; 7) est interposé entre la source de chauffage (4) et au moins une partie du conduit (2) de circulation du gaz à réchauffer.

2. Système de réchauffage (1) selon la revendication 1 **caractérisé en ce que** ledit écran thermique (6 ; 7) comprend au moins une paroi métallique ayant une forme courbe ou plane, dont la surface supérieure (S1 ; S3) est adjacente à au moins une partie de la surface inférieure (S2 ; S4) du conduit de circulation (2) et dont la surface inférieure (S5 ; S7) est adjacente à au moins une partie de la source de chauffage.

3. Système de réchauffage (1) selon l'une quelconque des revendications 1 ou 2 **caractérisé en ce que** ledit écran thermique (6 ; 7) est une plaque métallique.

4. Système de réchauffage (1) selon l'une des revendications 1 à 3 **caractérisé en ce que** le conduit de circulation (2) présente une forme de serpentin bobinée en spirale ou en hélice dont la surface inférieure (S2 ; S4) épouse la forme de la surface supérieure (S1 ; S3) de l'écran thermique (6 ; 7).

5. Système de réchauffage (1) selon les revendications 3 et 4 **caractérisé en ce que** le conduit de circulation (2) en forme de serpentin est bobiné en au moins une spirale à deux dimensions disposée dans un plan sensiblement parallèle au plan de la (ou des) plaque(s) métallique(s) de l'écran thermique (6 ; 7), de préférence le serpentin est bobiné en deux spirales à deux dimensions superposées et disposées dans deux plans sensiblement parallèles au plan de la (ou des) plaque(s) métallique(s) de l'écran thermique (6 ; 7).

6. Système de réchauffage (1) selon l'une quelconque des revendications 1 à 5 **caractérisé en ce que** l'écran thermique (6 ; 7) s'étend sur 40% à 95% de la surface du conduit de circulation (2), de préférence sur 60% à 95% et de préférence encore de 75% à 95%.

7. Système de réchauffage (1) selon l'une quelconque des revendications 1 à 6 **caractérisé en ce que** la seconde extrémité du conduit de circulation (2) est reliée à un dispositif de détente de gaz.

8. Système de réchauffage (1) selon l'une quelconque des revendications 1 à 7 **caractérisé en ce que** la source de chauffage (4) comprend au moins une résistance électrique, un thermostat de régulation (9) et un fusible thermique (10).

9. Système de réchauffage (1) selon la revendication 8 **caractérisé en ce que** ladite résistance électrique présente une surface extérieure (S8 ; S9) épousant la forme de la surface inférieure (S5 ; S7) de l'écran thermique (6 ; 7).

10. Système de réchauffage (1) selon la revendication 9 **caractérisé en ce que** l'écran thermique (6 ; 7) est en contact permanent avec au moins une partie du conduit de circulation (2) et une partie de la résistance.

11. Système de réchauffage (1) selon l'une quelconque des revendications 1 à 10 **caractérisé en ce que** l'ensemble des composants dudit système est compris dans un carter de protection (11).

12. Système de réchauffage (1) selon l'une quelconque des revendications 1 à 11, **caractérisé en ce que** :
- le conduit de circulation (2) présente une forme de serpentin bobiné en au moins deux spirales à deux dimensions,
- l'écran thermique (6 ; 7) comprend plusieurs plaques métalliques,
- la source de chauffage (4) comprend une resistance électrique en forme de plaque métallique présentant des dimensions sensiblement égales aux dimensions des plaques de l'écran thermique (6 ; 7), et :
- la surface supérieure (S₁₀) d'une première plaque métallique (5) est en contact avec une surface extérieure (S₁₁) de la première spirale (12) du serpentin,
- la surface supérieure (S₄) de ladite première spirale (12) du serpentin est en contact avec la surface inférieure (S₃) d'une deuxième plaque métallique (6) faisant écran thermique,
- la surface supérieure (S₇) de ladite deuxième plaque métallique (6) est en contact avec la surface inférieure (S₉) de la résistance électrique (4),
- la surface supérieure (S₈) de ladite résistance électrique est en contact avec la surface inférieure (S₅) d'une troisième plaque métallique (7) faisant écran thermique,
- la surface supérieure (S₁) de ladite troisième plaque métallique (7) est en contact avec la surface inférieure (S₂) de la deuxième spirale (13) du serpentin,
- la surface supérieure (S₁₂) de ladite deuxième spirale (13) du serpentin est en contact avec la surface inférieure (S₁₃) d'une quatrième plaque métallique (8) ;
l'ensemble des plaques étant fixées les unes par rapport aux autres par au moins un dispositif (15) de vis-écrou, ou un dispositif équivalent.

13. Système de réchauffage (1) selon l'une quelconque des revendications 1 à 12, **caractérisé en ce qu'**il est intégré à une source de gaz et comporte un moyen de raccord vers un dispositif de détente.

14. Procédé de réchauffage d'au moins un gaz mettant en oeuvre un système (1) tel que décrit à l'une des revendications 1 à 13, comprenant les étapes :
- circulation d'un gaz issu d'une source de gaz liquéfié, par exemple CO₂, O₂, N₂, Argon, N₂O, ou un mélange de ces gaz, à un débit compris entre 1m³/h et 100m³/h ;
- régulation de la température du système (1) comprise entre 20°C et 100°C avec une température de coupure du système comprise entre 40°C et 150°C.

## Claims

1. Heating system (1) for heating at least one gas or mixture of gases flowing along a duct (2), one end (3) of which is intended to be connected to at least one source of liquid or pressurized gas, comprising at least one electrical heating source (4) adjacent to one part of the duct (2), **characterized in that** at least one heat shield (6; 7) is inserted between the heating source (4) and at least part of the duct (2) along which the gas to be heated circulates.

2. Heating system (1) according to Claim 1, **characterized in that** the said heat shield (6; 7) comprises at least one metal wall of curved or planar shape, the upper surface (S1; S3) of which is adjacent to at least part of the lower surface (S2, S4) of the circulation duct (2) and the lower surface (S5; S7) of which is adjacent to at least part of the heating source.

3. Heating system (1) according to either one of Claims 1 and 2, **characterized in that** the said heat shield (6; 7) is a metal plate.

4. Heating system (1) according to one of Claims 1 to 3, **characterized in that** the circulation duct (2) has the shape of a spiral-wound or helically-wound serpentine coil, the lower surface (S2; S4) of which espouses the shape of the upper surface (S1; S3) of the heat shield (6; 7).

5. Heating system (1) according to Claims 3 and 4, **characterized in that** the serpentine coil circulation duct (2) is wound in at least one two-dimensional spiral arranged in a plane substantially parallel to the plane of the metal plate(s) of the heat shield (6; 7) and preferably the serpentine coil is wound in two superposed two-dimensional spirals arranged in two planes substantially parallel to the plane of the metal plate(s) of the heat shield (6; 7).

6. Heating system (1) according to any one of Claims 1 to 5, **characterized in that** the heat shield (6; 7) extends over 40% to 95% of the surface of the circulation duct (2), preferably over 60% to 95%, and more preferably still, 75% to 95%.

7. Heating system (1) according to any one of Claims 1 to 6, **characterized in that** the second end of the circulation duct (2) is connected to a gas expansion device.

8. Heating system (1) according to any one of Claims 1 to 7, **characterized in that** the heating source (4) comprises at least one electrical resistive element, a control thermostat (9) and a thermal cutout (10).

9. Heating system (1) according to Claim 8, **characterized in that** the said electrical resistive element has an exterior surface (S8; S9) that espouses the shape of the lower surface (S5; S7) of the heat shield (6; 7).

10. Heating system (1) according to Claim 9, **characterized in that** the heat shield (6; 7) is in permanent contact with at least part of the circulation duct (2) and part of the resistive element.

11. Heating system (1) according to any one of Claims 1 to 10, **characterized in that** all of the components of the said system are contained inside a protective casing (11).

12. Heating system (1) according to any one of Claims 1 to 11, **characterized in that**:
- the circulation duct (2) is in the form of a serpentine coil wound in at least two two-dimensional spirals,
- the heat shield (6; 7) comprises several metal plates,
- the heating source (4) comprises an electrical resistive element in the form of a metal plate having dimensions substantially equal to the dimensions of the plates of the heat shield (6; 7), and
- the upper surface (S₁₀) of a first metal plate (5) is in contact with an exterior surface (S₁₁) of the first spiral (12) of the serpentine coil,
- the upper surface (S₄) of the said first spiral (12) of the serpentine coil is in contact with the lower surface (S₃) of a second metal plate (6) forming a heat shield,
- the upper surface (S₇) of the said second metal plate (6) is in contact with the lower surface (S₉) of the electrical resistive element (4),
- the upper surface (S₈) of the said electrical resistive element is in contact with the lower surface (S₅) of a third metal plate (7) forming a heat shield,
- the upper surface (S₁) of the said third metal plate (7) is in contact with the lower surface (S₂) of the second spiral (13) of the serpentine coil,
- the upper surface (S₁₂) of the said second spiral (13) of the serpentine coil is in contact with the lower surface (S₁₃) of a fourth metal plate (8);
all of the plates being fixed together by at least one screw-nut device (15) or an equivalent device.

13. Heating system (1) according to any one of Claims 1 to 12, **characterized in that** it is incorporated into a gas source and comprises a means of connection to an expansion device.

14. Method of heating at least one gas employing a system (1) as described in one of Claims 1 to 13, comprising the following steps:
- circulating a gas from a liquefied gas source, for example CO₂, O₂, N₂, argon, N₂O or a mixture of these gases, at a flow rate of between 1m³/h and 100m²/h;
- regulating the temperature of the system (1) to between 20°C and 100°C, with a system shut down temperature of between 40°C and 150°C

## Patentansprüche

1. System (1) zum Erhitzen mindestens eines Gases oder einer Gasmischung, die in einer Rohrleitung (2) zirkuliert, von der ein Ende (3) dazu bestimmt ist, mit mindestens einer Quelle von Flüssiggas oder Druckgas verbunden zu werden, das mindestens eine elektrische Heizquelle (4) enthält, die einem Teil der Rohrleitung (2) benachbart ist, **dadurch gekennzeichnet, dass** mindestens ein Wärmeschild (6; 7) zwischen die Heizquelle (4) und mindestens einen Teil der Zirkulationsrohrleitung (2) des zu erhitzenden Gases eingefügt ist.

2. Erhitzungssystem (1) nach Anspruch 1, **dadurch gekennzeichnet, dass** der Wärmeschild (6; 7) mindestens eine metallische Wand enthält, die eine gekrümmte oder ebene Form hat, deren obere Fläche (S1; S3) mindestens einem Teil der unteren Fläche (S2; S4) der Zirkulationsrohrleitung (2) benachbart ist und deren untere Fläche (S5; S7) mindestens einem Teil der Heizquelle benachbart ist.

3. Erhitzungssystem (1) nach einem der Ansprüche 1 oder 2, **dadurch gekennzeichnet, dass** der Wärmeschild (6; 7) eine Metallplatte ist.

4. Erhitzungssystem (1) nach einem der Ansprüche 1 bis 3, **dadurch gekennzeichnet, dass** die Zirkulationsrohrleitung (2) die Form einer spiralförmig oder schraubenförmig gewundenen Rohrschlange hat, deren untere Fläche (S2; S4) sich an die Form der oberen Fläche (S1; S3) des Wärmeschilds (6; 7) anpasst.

5. Erhitzungssystem (1) nach den Ansprüchen 3 und 4, **dadurch gekennzeichnet, dass** die Zirkulationsrohrleitung (2) in Form einer Rohrschlange in mindestens einer zweidimensionalen Spirale gewickelt ist, die in einer Ebene im Wesentlichen parallel zur Ebene der Metallplatte(n) des Wärmeschilds (6; 7) angeordnet ist, vorzugsweise ist die Rohrschlange in zwei zweidimensionalen Spiralen gewickelt, die übereinander liegen und in zwei im Wesentlichen zur Ebene der Metallplatte(n) des Wärmeschilds (6; 7) parallelen Ebenen angeordnet sind.

6. Erhitzungssystem (1) nach einem der Ansprüche 1 bis 5, **dadurch gekennzeichnet, dass** der Wärmeschild (6; 7) sich über 40% bis 95% der Fläche der Zirkulationsrohrleitung (2), vorzugsweise über 60% bis 95% und noch bevorzugt über 75% bis 95% erstreckt.

7. Erhitzungssystem (1) nach einem der Ansprüche 1 bis 6, **dadurch gekennzeichnet, dass** das zweite Ende der Zirkulationsrohrleitung (2) mit einer Gasentspannungsvorrichtung verbunden ist.

8. Erhitzungssystem (1) nach einem der Ansprüche 1 bis 7, **dadurch gekennzeichnet, dass** die Heizquelle (4) mindestens einen elektrischen Widerstand, ein Regulierthermostat (9) und eine Schmelzsicherung (10) enthält.

9. Erhitzungssystem (1) nach Anspruch 8, **dadurch gekennzeichnet, dass** der elektrische Widerstand eine äußere Fläche (S8; S9) aufweist, die sich an die Form der unteren Fläche (S5; S7) des Wärmeschilds (6; 7) anpasst.

10. Erhitzungssystem (1) nach Anspruch 9, **dadurch gekennzeichnet, dass** der Wärmeschild (6; 7) mit mindestens einem Teil der Zirkulationsrohrleitung (2) und einem Teil des Widerstands in Dauerkontakt ist.

11. Erhitzungssystem (1) nach einem der Ansprüche 1 bis 10, **dadurch gekennzeichnet, dass** die Gesamtheit der Bauteile des Systems in einem Schutzgehäuse (11) enthalten ist.

12. Erhitzungssystem (1) nach einem der Ansprüche 1 bis 11, **dadurch gekennzeichnet, dass**:
- die Zirkulationsrohrleitung (2) die Form einer in mindestens zwei zweidimensionalen Spiralen gewickelten Rohrschlange hat,
- der Wärmeschild (6; 7) mehrere Metallplatten enthält,
- die Heizquelle (4) einen elektrischen Widerstand in Form einer Metallplatte enthält, die Abmessungen im Wesentlichen gleich den Abmessungen der Platten des Wärmeschilds (6; 7) aufweist, und:
- die obere Fläche (S₁₀) einer ersten Metallplatte (5) mit einer äußeren Fläche (S₁₁) der ersten Spirale (12) der Rohrschlange in Kontakt ist,
- die obere Fläche (S₄) der ersten Spirale (12) der Rohrschlange mit der unteren Fläche (S₃) einer zweiten als Wärmeschild dienenden Metallplatte (6) in Kontakt ist,
- die obere Fläche (S₇) der zweiten Metallplatte (6) mit der unteren Fläche (S₉) des elektrischen Widerstands (4) in Kontakt ist,
- die obere Fläche (S₈) des elektrischen Widerstands mit der unteren Fläche (S₅) einer einen Wärmeschild bildenden dritten Metallplatte (7) in Kontakt ist,
- die obere Fläche (S₁) der dritten Metallplatte (7) mit der unteren Fläche (S₂) der zweiten Spirale (13) der Rohrschlange in Kontakt ist,
- die obere Fläche (S₁₂) der zweiten Spirale (13) der Rohrschlange mit der unteren Fläche (S₁₃) einer vierten Metallplatte (8) in Kontakt ist;
wobei die Gesamtheit der Platten durch mindestens eine Schraube-Mutter-Vorrichtung (15) oder eine äquivalente Vorrichtung zueinander befestigt sind.

13. Erhitzungssystem (1) nach einem der Ansprüche 1 bis 12, **dadurch gekennzeichnet, dass** es in eine Gasquelle integriert ist und eine Anschlusseinrichtung an eine Entspannungsvorrichtung aufweist.

14. Verfahren zum Erhitzen mindestens eines Gases, das ein wie in einem der Ansprüche 1 bis 13 beschriebenes System (1) verwendet und die Schritte enthält:
- Zirkulation eines von einer Flüssiggasquelle stammenden Gases, zum Beispiel CO₂, O₂, N₂, Argon, N₂O, oder eine Mischung dieser Gase, mit einem Durchsatz zwischen 1 m³/h und 100 m³/h;
- Regulierung der Temperatur des Systems (1) zwischen 20°C und 100°C mit einer Abschalttemperatur des Systems zwischen 40°C und 150°C.
